Europäisches Patentamt

European Patent Office

Office européen des brevets

(11) Veröffentlichungsnummer: **0 319 720**
**A1**

## EUROPÄISCHE PATENTANMELDUNG

(21) Anmeldenummer: 88118557.3

(22) Anmeldetag: 08.11.88

(51) Int. Cl.4: **B65G 17/24**

(30) Priorität: 05.12.87 DE 3741242

(43) Veröffentlichungstag der Anmeldung:
14.06.89 Patentblatt 89/24

(84) Benannte Vertragsstaaten:
CH DE FR GB IT LI

(71) Anmelder: ROBERT BOSCH GMBH
Postfach 10 60 50
D-7000 Stuttgart 10(DE)

(72) Erfinder: Drexel, Peter
Plieninger Strasse 33
D-7031 Steinenbronn(DE)
Erfinder: Maier, Gernot, Dipl.-Ing. (FH)
Im Geiger 81
D-7000 Stuttgart 50(DE)
Erfinder: Rothfuss, Peter
Joh.-Sebastian-Bach-Strasse 6/1
D-7257 Ditzingen(DE)

(54) Kettenförderer für Werkstücke und Werkstückträger.

(57) Bei Kettenförderern mit Staurollenketten (18) werden die Freiräume (34) zwischen benachbarten Staurollen (28) abgedeckt durch Einsatzelemente (36), die auf durch die Staurollen (28) nicht besetzte Gelenkbolzen (24) der Staurollenkette (18) aufgerastet sind. Diese Einsatzelemente (36) sollen so ausgebildet sein, daß sie den Freiraum (34) auch abdekken, wenn die Staurollenkette (18) nach der einen und/oder der anderen Seite hin umgelenkt wird, ohne daß sich die Rastung auf den Gelenkbolzen (24) lockert oder löst.

Die Einsatzelemente (36) sind mit verhältnismäßig starren Rastschenkeln (40) und mit elastisch verformbaren Abdeckschenkel (44) versehen, die über eine zentrale Gelenkstelle (42) einstückig miteinander verbunden sind.

Bevorzugtes Anwendungsgebiet sind flexible Montagesysteme der industriellen Fertigung.

FIG. 2

EP 0 319 720 A1

## Kettenförderer für Werkstücke und Werkstückträger

### Stand der Technik

Die Erfindung geht aus von einem Kettenförderer nach der Gattung des Hauptanspruchs. Bei einem bekannten Kettenförderer dieser Gattung (DE-A1 34 38 786) sind die die Freiräume zwischen den Staurollen abdeckenden Einsatzelemente als zweischenkelige Federbügel ausgebildet, deren die Gelenkbolzen umgreifenden Federschenkel über einen die eigentliche Abdeckfunktion ausübenden Steg miteinander verbunden sind und deren freie Enden über am Gelenkbolzen anliegenden Rastbereiche hinaus verlängert und so geformt sind, daß sie eine das Federelement in die Raststellung zurückführende Rückstellkraft ausüben, wenn bei einer durch entsprechende Krümmung der Staurollenkette bedingten Verkürzung der Staurollenabstände die Staurollen das Federelement ein Stück weit aus der Raststellung herausdrücken. Diese Ausführung erfordert eine enge Tolerierung der Einsatzelemente, wenn einerseits eine ausreichende Rastwirkung und andererseits ein sicheres Zurückführen in die Raststellung beim Übergehen der gekrümmten Kettenbereiche in die gestreckte Lage sichergestellt sein soll.

### Vorteile der Erfindung

Die erfindungsgemäße Anordnung mit den kennzeichnenden Merkmalen des Hauptanspruchs hat den Vorteil, daß bei durch Umlenken bzw. Abkrümmen der Staurollenkette bedingten Verkürzungen der Staurollenabstände an der von den Einsatzelementen abgedeckten Seite die Einsatzelemente fest in der Raststellung verankert bleiben und nur die Abdeckschenkel der Einsatzelemente den Relativbewegungen der benachbarten Staurollen folgen, wobei ihre Abdeckfunktion voll erhalten bleibt. Bei einer bevorzugten Ausführungsform sind die Abdeckschenkel der Einsatzelemente derart geformt, daß sie beim Umlenken der Staurollenkette nach jeder Richtung an den benachbarten Staurollen angelegt bleiben.

Die Rastverbindung der Einsatzelemente mit den Gelenkbolzen hält besonders großen Beanspruchungen stand, wenn die Rastschenkel über ihre ganze Länge eine mindestens annähernd gleichbleibende Wandstärke haben und an einem scharnierartigen Gelenkbereich einstückig miteinander verbunden sind, an dem vorteilhaft auch die Abdeckschenkel einstückig angeformt sein können.

### Zeichnung

Ein Ausführungsbeispiel der Erfindung ist in der Zeichnung dargestellt und in der nachfolgenden Beschreibung näher erläutert. Es zeigen

Figur 1 einen Querschnitt durch einen erfindungsgemäßen Kettenförderer für flexible Montagesysteme,

Figur 2 einen Teilschnitt nach der Linie II-II in Figur 1 in vergrößertem Maßstab,

Figur 3 ein Einsatzelement der Staurollenkette nach Figur 2 und

Figur 4 die Staurollenkette nach Figur 2 in einem Krümmungsbereich.

### Beschreibung des Ausführungsbeispiels

Der Kettenförderer hat ein Tragprofil 10, welches mit Längsnuten 12, 14 zum Einsetzen von Verbindungsmitteln für weitere Tragprofile versehen ist, die zusammen das Gestell eines Transfersystems bilden. In das Tragprofil 10 ist von oben ein Kettenführungsprofil 16 eingesetzt, in welchem der fördernde Strang einer endlosen Staurollenkette 18 geführt und abgestützt ist. Diese ist in bekannter Weise über zwei Umlenkrollen an den Enden der Förderstrecke und über zwei Spannrollen geführt, wobei die eine Spannrolle die Kette anders als die Umlenkrollen und die andere Spannrolle umlenkt und krümmt. Der von der einen Umlenkrolle zu der die Kette 18 gegensinnig krümmende Spannrolle führende Kettenstrang verläuft in einem Hohlraum 20 des Tragprofils 10.

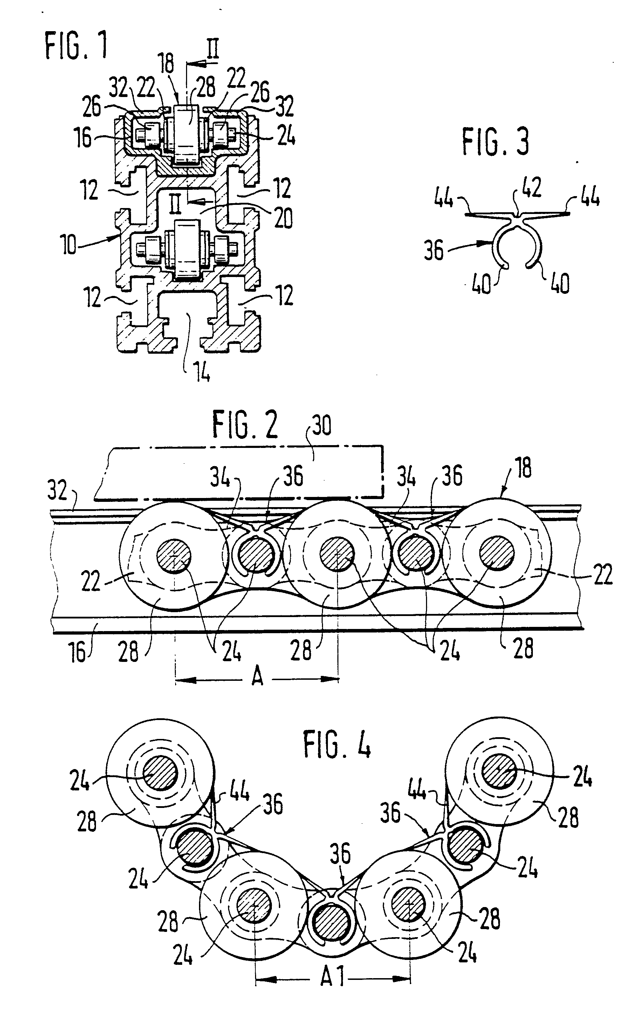

Die Kette 18 ist beiden Seiten ihrer Längsmittelebene mit laschenförmigen Kettengliedern 22 versehen, welche durch Gelenkbolzen 24 miteinander verbunden sind. Die Endbereiche der Gelenkbolzen 24 sind mit Laufrollen 26 versehen, welche auf Laufflächen des Kettenführungsprofils 16 aufliegen. Jeder zweite Gelenkbolzen 24 trägt frei drehbar zwischen den Kettengliedern eine Staurolle 28, die einen Auflagepunkt für einen in Figur 2 angedeuteten Werkstückträger 30 bildet. Das Kettenführungsprofil 16 ist auf seiner Kopfseite mit Abdeckleisten 32 versehen, die bis auf einen geringen Spalt an die Staurollen 28 heranreichen. Die Abdeckleisten 32 liegen etwas unterhalb der die Staurollen 28 tangierenden Transportebene, so daß das Transportgut ungehindert passieren kann.

Zwischen den Staurollen 28 sind keilartige Freiräume 34 in der Kette 18 gebildet, die an der das Transportgut tragenden Kettenseite erfindungsgemäß durch Einsatzelemente 36 abgedeckt sind, welche von den zwischen den Staurollen 28 liegenden Gelenkbolzen 24 getragen sind. Die Einsatzelemente 36 sind durch einstückige Kunststoffteile gebildet, welche auf die zugeordneten Gelenkbolzen 24 aufgerastet sind. Jedes Einsatzelement 36 hat zwei Rastschenkel 40, die gemeinsam den Gelenkbolzen 24 um mehr als 180° umfassen und an einer scharnierartigen Gelenkstelle 42 einstückig miteinander verbunden sind. Die Rastschenkel 40 haben in ihrer gesamten Länge eine gleichbleibende Wandstärke, die so bemessen ist, daß die Rastschenkel 40 in sich verhältnismäßig starr sind. Die Gelenkstelle 42 ist so bemessen, daß die Rastschenkel 40 beim Aufdrücken der Einsatzelemente 36 auf die Gelenkbolzen 24 federnd auseinanderspreizbar sind und dann mit einer allen Betriebsbeanspruchungen standhaltenden Kraft an die Gelenkbolzen 24 angedrückt werden.

An die Gelenkstelle 42 sind zwei einander entgegengerichtete Abdeckschenkel 44 angeformt, die im Ausgangszustand gerade gestreckt sind und in einer gemeinsamen Ebene liegen. Die Wandstärke der Abdeckschenkel 44 nimmt gegen deren freien Enden hin ab und ist so bemessen, daß die Abdeckschenkel 44 auch in sich federnd verformbar sind. Die Länge der Abdeckschenkel 44 ist so bemessen, daß sie bereits bei gestreckter Staurollenkette 18 gemäß Figur 2 elastisch verformt an dem benachbarten Staurollen 28 anliegen.

Bei der Montage werden die Einsatzelemente 36 einfach auf die freien Gelenkbolzen 24 aufgedrückt, bis sie mit den Gelenkbolzen 24 verrasten. Die Freiräume 34 sind dann nach außen abgedeckt, so daß keine Späne, Schrauben oder sonstige Kleinteile in sie hineinfallen können. Beim Krümmen der Staurollenkette 18 gemäß Figur 4 werden die normalen Staurollenabstände A auf die Abstände A₁ verkleinert. Dadurch werden die Abdeckschenkel 44 noch stärker elastisch verformt, ohne daß sie die Einsatzelemente 36 von den Gelenkbolzen 24 abgehoben werden. Beim Krümmen der Staurollenkette 18 in die andere Richtung vermögen die Abdeckschenkel 44 den sich voneinander entfernenden Staurollen 28 ebenfalls zu folgen und die Freiräume 34 abgedeckt zu halten, bis die Abdeckschenkel 44 ihre in Figur 3 dargestellte Strecklage erreichen.

## Ansprüche

1. Kettenförderer für Werkstücke und Werkstückträger, mit einem Kettenführungsprofil und einer Staurollenkette, die an jedem zweiten Gliedgelenk mit einer auf den Gelenkbolzen (24) drehbar gelagerten Staurolle (28) versehen ist, welche über das Kettenführungsprofil nach oben vorsteht und einen Auflagepunkt für das Transportgut bildet, wobei die zwischen den Staurollen (28) gebildeten keilartigen Freiräume (34) in der Staurollenkette (18) an der das Transportgut tragenden Kettenseite durch Einsatzelemente (36) abgedeckt sind, welche auf die zwischen den Staurollen (28) liegenden Gelenkbolzen (24) aufgerastet sind und zu diesem Zweck je zwei federnde Rastschenkel (40) haben, die den Gelenkbolzen (24) um mehr als 180° umfassen, dadurch gekennzeichnet, daß die Einsatzelemente (36) je mit zwei entgegengesetzt gerichteten, mit ihren freien Enden an den benachbarten Staurollen (28) anliegenden Abdeckschenkeln (44) versehen sind, die derart elastisch biegbar ausgeführt sind, daß sie die bei einer durch Umlenken (Abkrümmen) der Staurollenkette (18) hervorgerufenen Verkürzung des Staurollenabstandes (A - A₁) auf der das Transportgut tragenden Kettenseite aufzunehmen vermögen.

2. Kettenförderer nach Anspruch 1, dadurch gekennzeichnet, daß die Abdeckschenkel (44) der Einsatzelemente (36) durch entsprechende Formgebung auch bei gestreckter Staurollenkette (18) elastisch verformt an den Staurollen (28) anliegen und beim Umlenken der Staurollenkette (18) nach jeder Richtung an den Staurollen (28) angelegt bleiben.

3. Kettenförderer nach Anspruch 1 oder 2, dadurch gkeennzeichnet, daß die Rastschenkel (40) der Einsatzelemente (36) über ihre ganze Länge eine mindestens annähernd gleichbleibende Wandstärke haben und an einem scharnierartigen Gelenkbereich (42) einstückig miteinander verbunden sind.

4. Kettenförderer nach Anspruch 3, dadurch gekennzeichnet, daß die Abdeckschenkel (44) der Einsatzelelemente (36) am scharnierartigen Gelenkbereich (42) einstückig mit den Rastschenkeln (40) verbunden sind.

5. Kettenförderer nach Anspruch 3 oder 4, dadurch gekennzeichnet, daß die Einsatzelemente (36) aus Kunststoff bestehen.

FIG. 1

FIG. 3

FIG. 2

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 236 577 (BURKHARDT) * Seite 9, Zeile 6 - Seite 11, Zeile 16; Figuren 1,2 * --- | 1,4,5 | B 65 G 17/24 |
| A | EP-A-0 156 113 (BURKHARDT) * Seite 4, Zeile 16 - Seite 6, Zeile 15; Seite 10, Zeilen 15-18; Figuren 1-8 * --- | 1,5 | |
| D,A | DE-A-3 438 786 (ROBERT BOSCH) * Seite 6, Zeile 28 - Seite 8, Zeile 6; Figuren 1-4 * ----- | 1 | |

RECHERCHIERTE SACHGEBIETE (Int. Cl.4)

B 65 G 17/00
B 65 G 39/00

Der vorliegende Recherchenbericht wurde für alle Patentansprüche erstellt

| Recherchenort | Abschlußdatum der Recherche | Prüfer |
|---|---|---|
| BERLIN | 07-03-1989 | SIMON J J P |